# DEMANDE DE BREVET EUROPEEN

(11) **EP 3 556 515 A1**
(43) Date de publication de la demande: **23.10.2019**
(21) Numéro de dépôt: 19168324.2
(22) Date de dépôt: 10.04.2019
(51) Int. Cl.: B25B 27/00, F16D 13/58

(54) **ENSEMBLE D'EMBRAYAGE À FRICTION, OUTIL POUR L'ASSEMBLAGE DUDIT ENSEMBLE ET PROCÉDÉ D'ASSEMBLAGE UTILISANT LEDIT OUTIL**

(30) Priorité: 20.04.2018 FR 1853518
(71) Demandeur: VALEO EMBRAYAGES, 80009 Amiens (FR)
(72) Inventeur: LOPEZ PEREZ, Carlos, 95892 CERGY PONTOISE (FR)
(74) Mandataire: Vincent, Catherine Marie Marguerite

(57) **Abrégé**

L'invention concerne :
- un ensemble d'embrayage (1, 2) comprenant, d'une part, un mécanisme d'embrayage (1) à axe de révolution central (X) formé d'un couvercle (11) pourvu d'orifices de centrage (11a) sur un volant moteur (31), d'un diaphragme (12) et d'un plateau de pression (13) solidaires en rotation et, d'autre part, un disque d'embrayage (2) présentant un moyeu central (20) et portant, au moins sur sa face en regard du plateau de pression (13), des garnitures de friction périphériques (21), caractérisé en ce que le disque de friction (2) et le plateau de pression (13) sont solidarisés l'un à l'autre de façon coaxiale par des éléments de liaison adhésifs,
- un outil (5) pour l'assemblage dudit ensemble (1, 2) et,
- un procédé d'assemblage utilisant ledit outil (5).

## Description

L'invention concerne un ensemble d'embrayage à friction comprenant un mécanisme d'embrayage et un disque d'embrayage, un outil apte et destiné à l'assemblage dudit ensemble et un procédé d'assemblage utilisant ledit outil.

### ÉTAT DE LA TECHNIQUE ANTÉRIEURE

Les systèmes de transmission comprennent, notamment, un mécanisme d'embrayage et un ou plusieurs disques de friction.

Un mécanisme d'embrayage traditionnel comprend généralement, sur un axe de révolution, un couvercle dans lequel est logé un diaphragme annulaire basculant entre une position embrayée et une position débrayée de manière à déplacer un plateau de pression. Le couvercle, le diaphragme et le plateau de pression sont solidaires en rotation.

Le plateau de pression, sollicité par le diaphragme, est destiné à serrer un disque d'embrayage portant des garnitures de friction sur un plateau de réaction coaxial au plateau de pression et au disque d'embrayage.

Le disque d'embrayage à friction est lié en rotation à l'arbre d'entrée de la boîte de vitesses tandis que le plateau de pression est solidaire en rotation du couvercle et du plateau de réaction lié à l'arbre moteur. Ainsi, le serrage du disque d'embrayage à friction entre les plateaux de pression et de réaction correspond à une position embrayée qui assure la transmission d'un couple entre l'arbre moteur et l'arbre d'entrée de la boîte de vitesses.

Les mécanismes d'embrayage et les disques d'embrayage à friction sont généralement conditionnés séparément et livrés indépendamment les uns des autres sur les lignes de montage des constructeurs d'automobiles. Il faut alors disposer dans la zone de montage de lots différents pour le mécanisme d'embrayage et le disque d'embrayage qui doivent ainsi être montés, manuellement et en deux opérations successives, sur le volant moteur.

Ces deux opérations sont complexes, délicates et laborieuses car elles nécessitent l'usage des deux mains d'un opérateur ainsi que l'emploi d'un mandrin de centrage. Les opérations de manutention sont donc nombreuses et peuvent conduire à la chute du disque d'embrayage et à sa détérioration.

De plus, lors d'une opération de maintenance du véhicule chez un garagiste, le montage en position inversée du disque d'embrayage par rapport au mécanisme d'embrayage est possible. Cela entraîne un dysfonctionnement de l'ensemble d'embrayage.

En outre, le mandrin de centrage est généralement réalisé par moulage à injection d'une matière plastique et ses dimensions ne sont donc pas parfaites ce qui peut créer un jeu significatif au centrage sur le moyeu et sur le roulement de centrage du volant ou du moteur

Or, si le disque d'embrayage n'est pas monté de façon parfaitement centrée, ce qui est le cas en présence d'un jeu non maîtrisé, non seulement la qualité de la transmission peut s'en trouver altérée mais le disque peut aussi être endommagé lors de l'opération ultérieure de pose de la cloche de la boîte de vitesses sur le carter du moteur.

Dans le FR2632032, un mécanisme d'embrayage et un disque d'embrayage à friction sont réunis sous la forme d'un ensemble unitaire sur un outil de support auxiliaire, avant montage sur le volant moteur. Cet outil auxiliaire comporte une zone de maintien recevant le disque d'embrayage, des moyens permettant de retenir le mécanisme d'embrayage et le disque d'embrayage co-axialement sur cet outil et un appendice assurant le positionnement centré du disque pendant le montage de l'ensemble sur le volant moteur.

Grâce à cette disposition, l'ensemble comprenant le mécanisme d'embrayage et le disque d'embrayage peut être transporté dans un même conteneur en étant supporté par l'outil auxiliaire jusqu'à la ligne de montage et peut être boulonné d'une manière simple sur le volant moteur sans utiliser un mandrin de centrage.

Cependant, le positionnement et le montage de cet ensemble sur le volant moteur nécessite toujours l'emploi d'un outil auxiliaire.

En outre, cet outil n'est pas polyvalent du fait que les moyens de centrage du disque et les moyens de retenue conjointe du mécanisme et du disque dépendent de la structure respective de ces composants, notamment, de la forme du diaphragme annulaire et donc du type d'embrayage dont le montage est envisagé.

Enfin, cet outil ne permet toujours pas d'assurer un centrage fiable et satisfaisant du mécanisme d'embrayage et du disque d'embrayage.

### EXPOSÉ DE L'INVENTION

L'invention vise à remédier à ces problèmes techniques en proposant un ensemble solidaire dans lequel le mécanisme d'embrayage et le disque de friction sont positionnés, assemblés et maintenus dans des positions relatives précises et centrées, pendant le transport puis au montage sur le volant moteur et enfin jusqu'à la première mise en position embrayée du système de transmission.

Ce but est atteint au moyen d'un ensemble d'embrayage comprenant, d'une part, un mécanisme d'embrayage à axe de révolution central formé d'un couvercle pourvu d'orifices de centrage sur un volant moteur, d'un diaphragme et d'un plateau de pression solidaires en rotation et, d'autre part, un disque de friction présentant un moyeu central et portant, au moins sur sa face en regard du plateau de pression, des garnitures de friction périphériques, caractérisé en ce que le disque de friction et le plateau de pression sont solidarisés l'un à l'autre de façon coaxiale par des éléments de liaison adhésifs.

Selon une caractéristique avantageuse, ces éléments de liaison exercent une force radiale de cohésion comprise entre 5 et 50 N.

Cette force est supérieure à la force définie par la formule (K)x(g)x(Masse du disque d'embrayage) ; où g=9,81 m.s⁻² et K est un coefficient de sécurité qui est supérieur ou égal à 1.

Selon une autre caractéristique avantageuse, les éléments de liaison sont susceptibles de se rompre en libérant le disque d'embrayage lorsqu'un couple inférieur ou égal à 20 Nm est appliqué à l'interface entre les garnitures de friction et le plateau de pression.

Selon encore une autre caractéristique, les éléments de liaison adhésifs recouvrent entre 0,1% et 10% de la face de friction du plateau de pression et/ou de la face en regard de la garniture de friction périphérique.

Selon un mode de réalisation préférentiel, les éléments de liaison sont constitués d'au moins une zone adhésive comprenant une colle sensible à la pression.

Selon une caractéristique spécifique de ce mode de réalisation, la colle est un polymère à base d'acrylate.

Selon une première variante de l'invention, la zone adhésive est disposée sur la face de friction du plateau de pression du mécanisme d'embrayage en regard des garnitures de friction périphériques du disque de friction.

Selon une seconde variante de l'invention, l'ensemble d'embrayage comprend une zone adhésive située sur la face du disque de friction disposée en regard du plateau de pression.

Ainsi, la zone adhésive peut être appliquée sur une seule face ou sur les deux faces disposées axialement en regard, respectivement, du disque d'embrayage et du plateau de pression.

Ces zones adhésives peuvent être sous forme de lignes circulaires ou de zones annulaires.

Avantageusement, la garniture de friction peut comprendre des rainures s'étendant radialement sur la face de friction de la garniture, lesdites rainures présentant une largeur L.

Le diamètre de la zone adhésive peut être au moins supérieur à 2 fois la largeur L de la rainure. De cette manière, il est possible d'appliquer de manière automatisée la zone adhésive sur le plateau de pression et/ou sur le disque d'embrayage sans prendre en considération la position des rainures.

Le diamètre de la zone adhésive peut être compris entre 3 et 12 mm.

Les zones adhésives peuvent être appliquées sur la face de friction du plateau de pression, à proximité de la périphérie interne du plateau de pression. De cette manière, il est possible de limiter le nombre de zones adhésives tout en garantissant la force radiale de cohésion comprise entre 5 et 50 N et en diminuant la valeur de couple à rupture appliqué à l'interface entre les garnitures de friction et le plateau de pression.

Les zones adhésives peuvent être appliquées conjointement sur une surface périphérique externe de la garniture de friction et sur la périphérie du plateau de pression. De cette manière, les zones adhésives ne sont pas en contact direct avec la surface de friction du disque d'embrayage et dans certains de la surface de friction du plateau de pression et ne risquent donc pas d'altérer le coefficient de frottement de l'ensemble d'embrayage lors des premiers démarrages du véhicule.

Selon d'autres variantes, les surfaces adhésives sont sous forme de traits de colle rectilignes ou croisés.

Selon encore une autre variante, l'ensemble d'embrayage de l'invention comprend plusieurs zones adhésives ponctuelles.

Selon une variante alternative, la zone adhésive est formée d'un ruban annulaire adhésif double-face ou de pastilles adhésives double-face.

Un autre objet de l'invention est un outil pour l'assemblage d'un ensemble d'embrayage tel que défini ci-dessus, caractérisé en ce qu'il comprend un piétement prolongé, vers le haut, d'une part, par une embase de support du mécanisme d'embrayage pourvue de plots périphériques de calage dont la position coïncide avec celle des orifices de centrage du couvercle et, d'autre part, par un mandrin axial adapté au moyeu central du disque de friction.

Selon une caractéristique avantageuse de cet outil, l'embase de support est formée de bras radiaux dont les extrémités portent les plots de calage du couvercle.

Selon une autre caractéristique de l'outil de l'invention, le mandrin présente une portion inférieure à paroi lisse ménageant un espace intercalaire avec l'orifice central du diaphragme et une portion supérieure à paroi cannelée destinée à coulisser axialement dans le moyeu du disque de friction.

Selon une variante de cet outil, la paroi cannelée s'étend sur toute la hauteur du mandrin en ménageant toujours un espace intercalaire avec l'orifice central du diaphragme

Encore un autre objet de l'invention est un procédé d'assemblage d'un ensemble d'embrayage présentant les caractéristiques mentionnées précédemment au moyen de l'outil décrit ci-dessus, caractérisé en ce qu'on dépose le mécanisme d'embrayage sur l'embase de l'outil en disposant le plateau de pression sur le haut et en introduisant les plots de calage dans les orifices de centrage du couvercle, on applique des éléments de liaison adhésifs sur le plateau de pression et/ou sur l'une des faces du disque de friction, on engage le mandrin axial de l'outil dans le moyeu du disque de friction et on exerce un appui sur le disque pour le solidariser au mécanisme puis on extrait de l'outil l'ensemble solidaire par traction axiale le long du mandrin.

Selon une caractéristique du procédé, on applique les éléments de liaison sur une surface comprise entre 0,1% et 10% de la face de friction du plateau de pression et/ou de la garniture de friction.

L'invention permet d'effectuer un montage aisé et rapide et de garantir un centrage précis des principaux composants de l'embrayage du système de transmission en une seule opération manuelle et sans utiliser un quelconque outil pour le positionnement relatif de ces composants.

Le procédé et l'outil de l'invention s'appliquent aussi bien à une première monte de l'élément d'embrayage unitaire sur la chaîne de production d'un constructeur automobile qu'à une opération de rechange ou de maintenance chez un garagiste.

L'invention permet en outre d'offrir un gain significatif du coût logistique du fait que l'ensemble d'embrayage unitaire et solidaire regroupe plusieurs composants qui étaient auparavant gérés séparément.

### BREVE DESCRIPTION DES FIGURES

D'autres caractéristiques et avantages de l'invention ressortiront à la lecture de la description qui va suivre, en référence aux figures annexées et détaillées ci-après.
La figure 1 est une vue en perspective éclatée d'un groupe motopropulseur et d'un système de transmission (en coupe partielle) équipé d'un mode de réalisation de l'ensemble d'embrayage de l'invention.
La figure 2A représente une vue en perspective d'un mode de réalisation de l'outil selon l'invention avant assemblage d'un mécanisme d'embrayage et d'un disque de friction pour former l'ensemble d'embrayage de la figure 1.
La figure 2B représente une vue en perspective de l'outil de la figure 2A sur lequel repose un mécanisme d'embrayage pourvu d'une première variante des éléments de liaison avec un disque de friction.
Les figures 3A et 3B représentent des vues, respectivement, en perspective et en coupe de l'outil de la figure 2A après assemblage du mécanisme d'embrayage et du disque de friction.
La figure 4 représente une vue en perspective d'un disque de friction pourvu d'une seconde variante des éléments de liaison avec un mécanisme d'embrayage.

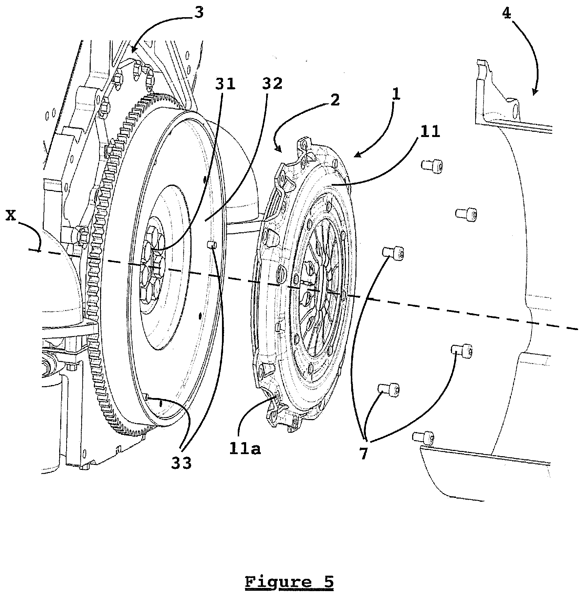

La figure 5 est une vue de détail en perspective d'un ensemble d'embrayage selon l'invention en phase de montage sur le moteur.
La figure 6 est une vue de détail en perspective d'un ensemble d'embrayage selon un autre mode de réalisation de l'invention.

Pour plus de clarté, les éléments identiques ou similaires sont repérés par des signes de référence identiques sur l'ensemble des figures.

### DESCRIPTION DÉTAILLÉE DE MODES DE REALISATION

Naturellement, les modes de réalisation illustrés par les figures présentées ci-dessus ne sont donnés qu'à titre d'exemples non limitatif. Il est explicitement prévu que l'on puisse combiner entre eux ces différents modes et variantes pour en proposer d'autres.

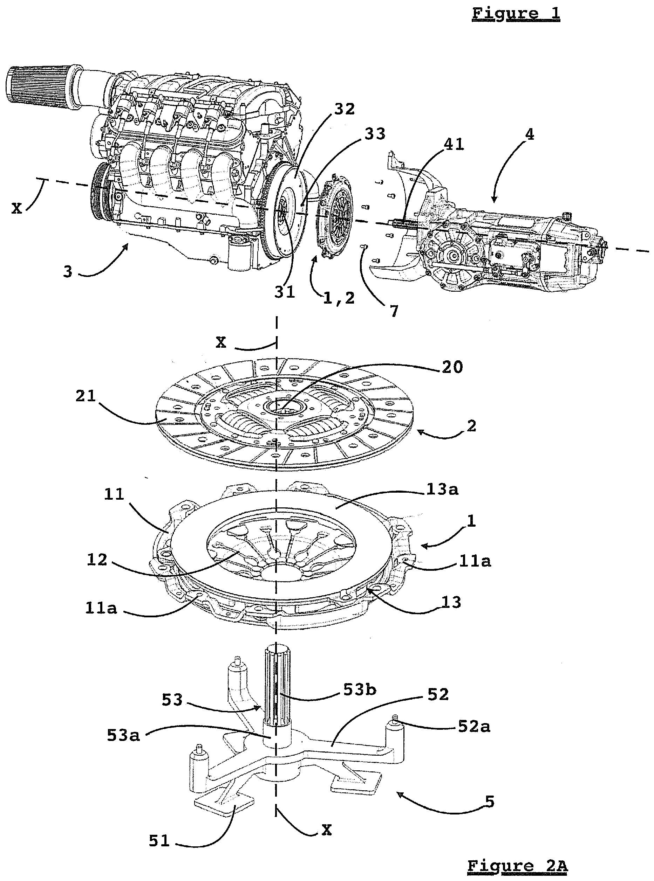

Sur la figure 1 est représenté un bloc moteur 3 équipé d'un système de transmission et d'une boîte de vitesses 4. Le système de transmission comprend ici un mécanisme d'embrayage traditionnel 1 à axe de révolution X, pourvu, notamment, d'un couvercle 11, d'un plateau de pression 13 et d'un diaphragme 12 intercalé entre le couvercle 11 et le plateau de pression 13. Le couvercle 11, le diaphragme 12 et le plateau de pression 13 du mécanisme d'embrayage 1 sont solidarisés en rotation avec le volant moteur 31 au moyen de vis 7.

Le couvercle 11 est pourvu, sur son pourtour, d'orifices de centrage 11a coopérant au montage avec des pions 33 portés par le volant moteur 31.

Le couvercle est pourvu également, sur son pourtour, de trous de passage des vis 7, distincts des orifices de centrage 11a.

Un disque d'embrayage 2 pourvu d'un moyeu central 20 est lié en rotation à l'arbre d'entrée 41 d'une boîte de vitesses 4 tandis que le volant moteur 31 est solidaire en rotation du couvercle 11 par l'intermédiaire des vis 7. Ainsi, le serrage du disque d'embrayage 2 entre le plateau de pression 13 et le plateau de réaction 32 assure la transmission du couple moteur à la boîte de vitesses 4.

Le volant moteur 31 est, par exemple, un double-volant moteur amortisseur, comme illustré par la figure 1. Ce volant moteur peut être aussi sous forme d'un volant rigide.

Plus précisément, le diaphragme 12 est sollicité par une pédale d'embrayage (non représentée) pour basculer entre une position débrayée et une position embrayée. Dans la position embrayée, le diaphragme 12 déplace axialement le plateau de pression 13 qui vient alors serrer le disque d'embrayage 2 sur le plateau de réaction 32 du volant moteur 31 coaxial au plateau de pression 13 et au disque d'embrayage 2.

A cet effet, le disque d'embrayage 2 porte, au moins sur sa face en regard du plateau de pression 13, des garnitures périphériques de friction 21.

Le mécanisme d'embrayage 1 et le disque d'embrayage 2 sont des composants fabriqués de façon indépendante qui sont habituellement destinés à être montés, manuellement et en deux opérations successives, sur le volant moteur 31.

L'invention a pour but de simplifier le montage de ces composants en réalisant un ensemble d'embrayage dans lequel ces composants 1, 2 sont préalablement solidarisés l'un avec l'autre de façon séparable dans une position adaptée au montage à la fois sur le volant moteur et sur la boîte de vitesses.

A cet effet, le disque de friction 2 et le plateau de pression 13 sont assemblés l'un à l'autre de façon coaxiale et de façon temporaire par des éléments de liaison adhésifs exerçant une force radiale de cohésion comprise entre 5 et 50 N.

Cette force de cohésion doit être suffisante pour maintenir une liaison ferme et stable entre le mécanisme d'embrayage 1 et le disque de friction 2 pendant le transport de l'ensemble ainsi constitué puis lors de la manipulation de cet ensemble en vue du montage de l'embrayage sur le volant moteur 31. La force radiale de cohésion peut être mesurée par exemple en bloquant le mécanisme d'embrayage 1 et appliquant un effort radial sur le disque friction par rapport à l'axe X.

En particulier, la résistance mécanique de ces éléments de liaison doit permettre de supporter le poids du disque de friction. Toutefois, cette force doit aussi être suffisamment faible pour que le disque et le mécanisme puissent facilement se séparer à la première phase d'embrayage après le montage de l'ensemble sur le moteur.

Par conséquent, l'invention prévoit que les éléments de liaison adhésifs sont susceptibles de se rompre en libérant le disque d'embrayage lorsqu'un couple inférieur ou égal à 20 Nm est appliqué à l'interface entre les garnitures de friction 21 et le plateau de pression 13. Ce couple de rupture est inférieur au couple minimal généré par le groupe motopropulseur lorsque celui-ci est au régime ralenti du moteur. Le couple de rupture est appliqué selon l'axe X.

Ces valeurs de force et de couples sont compatibles avec toutes les gammes de boîte de vitesses (synchronisée, mécanique et cinématique).

Selon l'invention, les éléments de liaison adhésifs sont réalisés de préférence sur les surfaces en vis-à-vis du disque de friction 2 et/ou du plateau de pression 13 du mécanisme d'embrayage 1. Compte tenu de la structure du disque de friction 2, ces surfaces se situent alors nécessairement à la périphérie du disque 2 dans la zone où se trouvent les garnitures 21.

Toutefois, la nature et la position précise des éléments de liaison entre ces deux composants de l'embrayage sont déterminées en fonction du couple du moteur afin de garantir que, lors du premier changement de vitesse après le montage de l'ensemble d'embrayage sur le volant moteur, la liaison soit rompue immédiatement et que le disque d'embrayage puisse ensuite tourner librement par rapport au mécanisme d'embrayage.

Cette rupture est irréversible et ainsi, après rupture des éléments de liaison et séparation du disque et du mécanisme, ni les fonctions et les propriétés intrinsèques et prédéterminées de l'embrayage, ni sa fiabilité, en particulier, le coefficient de frottement des garnitures de friction 21, ne seront modifiés.

De préférence, le procédé d'assemblage de l'invention prévoit d'appliquer les éléments de liaison adhésifs 6, 6a sur une surface comprise entre 0,1% et 10% de la surface de la face de friction 13a du plateau de pression 13 et/ou de la garniture de friction 21.

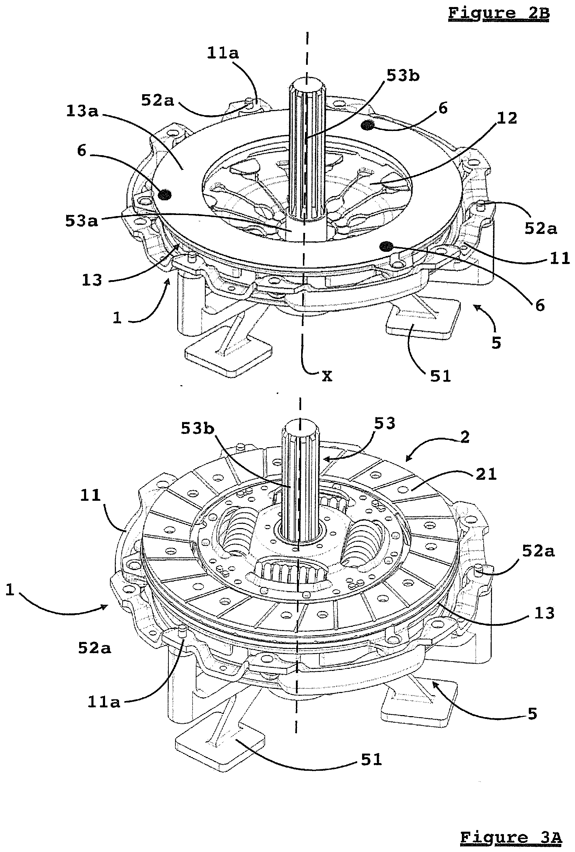

Un mode de réalisation de l'ensemble d'embrayage de l'invention consiste à disposer les éléments de liaison sur la face de friction 13a du plateau de pression 13 et sous forme d'au moins une zone adhésive 6 comprenant une colle sensible à la pression, comme illustré par la figure 2B.

La zone adhésive 6 est de forme annulaire. Le diamètre de la zone adhésive peut être compris entre 3 et 12 mm.

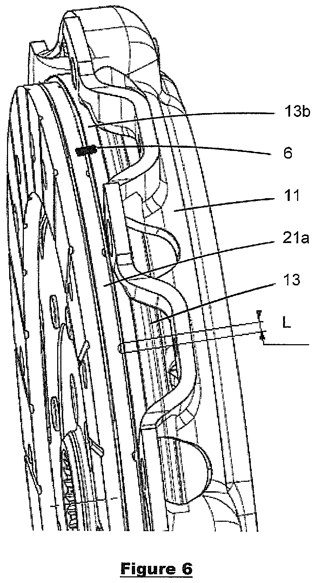

La garniture de friction 21 comprend des rainures s'étendant radialement sur la face de friction de la garniture débouchant sur la surface périphérique externe 21a de la garniture de friction, lesdites rainures présentant une largeur L (visible sur la figure 6). Dans ce cas, le diamètre de la zone adhésive est au moins supérieur à 2 fois la largeur L de la rainure. L'adhésion du disque d'embrayage sur le plateau de pression 13 est ainsi améliorée.

De préférence, cette colle est un polymère à base d'acrylate, sensible à la pression et dont la prise est rapide à température ambiante car la vitesse d'opération des lignes d'assemblage et de conditionnement est incompatible avec une étape intermédiaire de séchage. Toutefois, d'autres types de colles pourraient être utilisées sans sortir du cadre de l'invention.

On applique ensuite le disque d'embrayage 2 sur la face de friction du plateau de pression 13 pré-encollée.

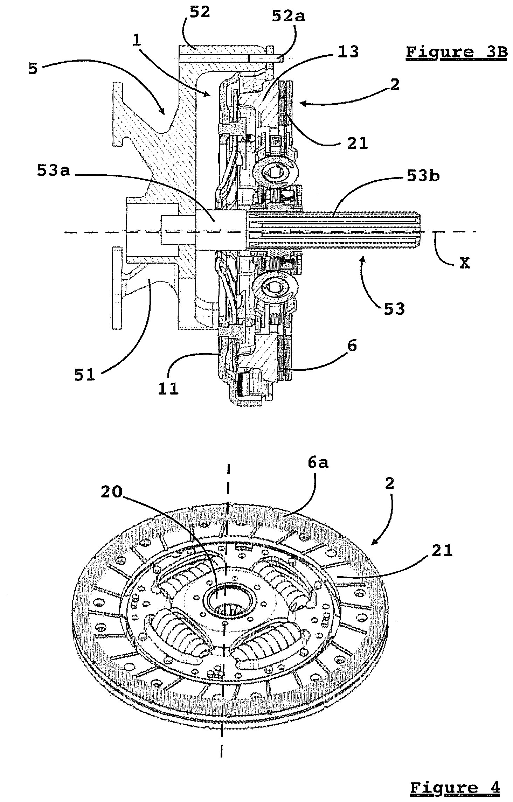

Selon une autre variante illustrée par la figure 4, l'invention prévoit de disposer en outre une zone adhésive sur la face de friction de la garniture de friction 21 du disque 2 disposée en regard du plateau de pression 13.

Le cas échéant, l'ensemble d'embrayage comprend plusieurs zones adhésives ponctuelles ou bien encore au moins une zone adhésive formée d'un ruban annulaire adhésif double-face 6a, comme illustré par la figure 4. On applique ensuite le disque d'embrayage 2 avec la face de friction pré-encollée sur la face 13a en regard du plateau de pression 13.

Selon une autre variante illustrée par la figure 6, l'invention prévoit d'appliquer les zones adhésives 6 conjointement sur une surface périphérique externe 21a de la garniture de friction et sur la périphérie du plateau de pression 13. Dans ce cas, les zones adhésives 6 sont appliquées sur la surface périphérique externe 13b du plateau de pression 13. Ainsi, les zones adhésives 6 ne sont pas directement en contact avec les surfaces de friction du disque d'embrayage et du plateau de pression. Les zones adhésives 6 sont notamment appliquées sur une zone de la garniture exempte de rainure de largeur L.

Selon encore une autre variante du procédé, on dépose des éléments de liaison adhésifs sur la face de friction 13a du plateau de pression 13 et sur la face de friction en regard d'une des garnitures de friction 21 du disque d'embrayage 2.

L'invention concerne également un outil 5 pour l'assemblage de l'ensemble d'embrayage 1,2 précédemment décrit. Cet outil dont un mode de réalisation est illustré par les figures 2A, 2B et 3A, 3B, comprend un piétement 51 prolongé, vers le haut, d'une part, par une embase de support du mécanisme d'embrayage 1 et, d'autre part, par un mandrin axial 53.

L'embase est formée de bras radiaux 52 dont les extrémités portent des plots périphériques 52a de calage du couvercle 11 du mécanisme d'embrayage 1.

La position angulaire et circonférentielle des plots 52a coïncide avec celle des orifices 11a de centrage du couvercle 11 qui sont destinés à coopérer ultérieurement avec les pions 33, après montage de l'ensemble solidaire 1, 2 sur le volant moteur 31.

Le mandrin 53 présente, quant à lui, une portion inférieure 53a à paroi lisse ménageant un léger espace intercalaire avec l'orifice central du diaphragme 11 et une portion supérieure 53b à paroi cannelée destinée à coulisser axialement dans le moyeu 20 du disque 2 de friction, comme illustré par les figures 3A et 3B.

Le moyeu 20 comprend une cannelure intérieure adaptée à la cannelure de la portion 53b du mandrin 53.

Selon une variante de cet outil 5, la paroi cannelée s'étend sur toute la hauteur du mandrin 53 en ménageant toujours un espace intercalaire avec l'orifice central 20 du diaphragme 2.

L'assemblage du disque 2 et du mécanisme d'embrayage 1 est mis en oeuvre selon le procédé décrit ci-après en utilisant l'outil 5.

On dépose tout d'abord le mécanisme d'embrayage 1 sur l'embase 52 de l'outil 5 en disposant le plateau de pression 13 vers le haut et en introduisant les plots 52a de calage dans les orifices 11a de centrage du couvercle 11.

On applique ensuite les éléments de liaison ici sous forme de trois points de colle 6 sur le plateau de pression 13, comme illustré par la figure 2B. Une variante de mise en oeuvre peut consister à disposer les éléments de liaison sur l'une des faces de friction du disque d'embrayage 2 ou à la fois sur les deux faces en regard, respectivement, du disque 2 et du plateau de pression 13.

L'étape suivante consiste à engager le mandrin axial 53 de l'outil 5 dans le moyeu 20 du disque 2 de friction et d'exerce un appui sur le disque pour le solidariser au mécanisme 1 et l'enfermer à l'intérieur du couvercle 11.

Cet appui a pour but de générer une pression sur les zones adhésives entre les surfaces en contact de façon à favoriser la prise rapide de l'adhésif.

Une fois la solidarisation assurée entre le disque 2 et le plateau de pression 13, on extrait de l'outil 5 l'ensemble solidaire 1, 2 d'un seul tenant par traction axiale le long du mandrin 53.

Le montage ultérieur de cet ensemble 1, 2 sur le volant moteur 31 (ou le plateau de réaction 32) et la boîte de vitesses 4 est effectué en l'amenant selon l'axe X dans une position angulaire permettant, d'une part, l'introduction des pions 33 dans les orifices 11a du couvercle 11 et, d'autre part, le vissage des vis 7 dans les trous de passage du mécanisme d'embrayage 1 et du volant moteur 31 prévus à cet effet. L'opération finale consiste à engager l'arbre 41 de la boîte de vitesses 4 dans le moyeu 20 du disque d'embrayage 2.

## Revendications

1. Ensemble d'embrayage comprenant, d'une part, un mécanisme d'embrayage (1) à axe de révolution central (X) formé d'un couvercle (11) pourvu d'orifices de centrage (11a) sur un volant moteur (31), d'un diaphragme (12) et d'un plateau de pression (13) solidaires en rotation et, d'autre part, un disque d'embrayage (2) présentant un moyeu central (20) et portant, au moins sur sa face en regard du plateau de pression (13), des garnitures de friction (21) périphériques, **caractérisé en ce que** le disque de friction (2) et le plateau de pression (13) sont solidarisés l'un à l'autre de façon coaxiale par des éléments de liaison adhésifs (6, 6a), les éléments de liaison (6, 6a) exerçant une force radiale de cohésion comprise entre 5 et 50 N.

2. Ensemble d'embrayage selon l'une des revendications précédentes, **caractérisé en ce que** lesdits éléments de liaison adhésifs (6, 6a) sont susceptibles de se rompre lorsqu'un couple inférieur ou égal à 20 Nm est appliqué à l'interface entre les garnitures de friction (21) et le plateau de pression (13).

3. Ensemble d'embrayage selon l'une des revendications précédentes, **caractérisé en ce que** lesdits éléments de liaison adhésifs (6, 6a) sont disposés sur la face de friction (13a) du plateau de pression (13) du mécanisme d'embrayage (1) en regard des garnitures de friction (21) périphériques du disque de friction (2).

4. Ensemble d'embrayage selon la revendication précédente, **caractérisé en ce que** lesdits éléments de liaison adhésifs (6, 6a) recouvrent entre 0,1% et 10% de la face de friction (13a) du plateau de pression (13) et/ou de la face en regard de la garniture de friction (21) périphérique.

5. Ensemble d'embrayage selon l'une des revendications précédentes, **caractérisé en ce que** lesdits éléments de liaison adhésifs sont constitués d'au moins une zone adhésive (6, 6a) comprenant une colle sensible à la pression.

6. Ensemble d'embrayage selon la revendication précédente, **caractérisé en ce que** ladite colle est un polymère à base d'acrylate.

7. Ensemble d'embrayage selon l'une des revendications 5 ou 6, **caractérisé en ce qu'**il comprend une zone adhésive (6a) disposée sur la face du disque de friction (2) en regard du plateau de pression (13).

8. Ensemble d'embrayage selon l'une des revendications 5 à 7, **caractérisé en ce qu'**il comprend plusieurs zones adhésives ponctuelles (6).

9. Ensemble d'embrayage selon l'une des revendications 5 à 8, **caractérisé en ce que** ladite zone adhésive est formée d'un ruban annulaire adhésif double-face (6a).

10. Ensemble d'embrayage selon l'une quelconque des revendications précédentes, **caractérisé en ce que** les zones adhésives (6) sont appliquées sur la face de friction (13a) du plateau de pression (13), à proximité de la périphérie interne du plateau de pression.

11. Ensemble d'embrayage selon l'une des revendications 5 à 10, **caractérisé en ce que** la garniture de friction (21) comprend des rainures s'étendant radialement sur la face de friction de la garniture, lesdites rainures présentant une largeur (L) et le diamètre de la zone adhésive (6) est au moins supérieur à 2 fois la largeur (L) de la rainure.

12. Ensemble d'embrayage selon la revendication 1 ou 2, **caractérisé en ce que** les zones adhésives (6) sont appliquées conjointement sur une surface périphérique externe (21a) de la garniture de friction (21) et sur la périphérie du plateau de pression (13).

13. Outil (5) pour l'assemblage d'un ensemble d'embrayage (1, 2) selon l'une des revendications précédentes, **caractérisé en ce qu'**il comprend, selon l'axe (X), un piétement (51) prolongé axialement, d'une part, par une embase (52) de support du mécanisme d'embrayage (1) pourvue de plots périphériques (52a) de calage dont la position coïncide avec celle des orifices (11a) de centrage du couvercle (11) et, d'autre part, par un mandrin axial (53) adapté au moyeu central (20) du disque de friction (2) et **en ce que en ce que** ledit mandrin (3) présente une portion inférieure (53a) à paroi lisse ménageant un espace intercalaire avec l'orifice central du diaphragme (12) et une portion supérieure (53b) à paroi cannelée destinée à coulisser axialement dans le moyeu (20) du disque de friction (2).

14. Procédé d'assemblage d'un ensemble d'embrayage (1, 2) selon l'une des revendications 1 à 12 au moyen d'un outil (5) selon la revendication 13, **caractérisé en ce qu'**on dépose le mécanisme d'embrayage (1) sur l'embase (52) de l'outil (5) en disposant le plateau de pression (13) sur le haut et en introduisant les plots (52a) de calage dans les orifices (11a) de centrage du couvercle (11), on applique des éléments de liaison adhésifs (6, 6a) sur le plateau de pression (13) et/ou sur l'une des faces du disque de friction (2), on engage le mandrin axial (53) de l'outil (5) dans le moyeu (20) du disque de friction (2) et on exerce un appui sur le disque (1) pour le solidariser au mécanisme (2) puis on extrait de l'outil l'ensemble solidaire (1, 2) par traction axiale le long du mandrin (53).

15. Procédé d'assemblage selon la revendication précédente, **caractérisé en ce qu'**on applique les éléments de liaison (6, 6a) sur une surface comprise entre 0,1% et 10% de la face de friction (13a) du plateau de pression (13) et/ou de la garniture de friction (21).
